# FASCICULE DE BREVET EUROPEEN

(11) **EP 0 619 254 B1**
(45) Date de publication et mention de la délivrance du brevet: **17.05.1995**
(21) Numéro de dépôt: 94870058.8
(22) Date de dépôt: 31.03.1994
(51) Int. Cl.: B65G 69/18

(54) **Installation et procédé de transfert de produits s'écoulant par gravité**
Anlage und Verfahren zur Übergabe von durch Schwerkraft fliessende Produkte
Apparatus and method for transferring products flowing by gravity

(30) Priorité: 01.04.1993 FR 9303832
(43) Date de publication de la demande: 12.10.1994
(73) Titulaire: ELVECO msj S.A., B-1200 Bruxelles (BE)
(72) Inventeur: Lhoest, Willy, B-1200 Bruxelles (BE)
(74) Mandataire: Duyck, Frans N.E.

(56) Documents cités:
- EP-A- 0 092 008
- DE-B- 1 034 549
- FR-A- 2 077 451
- FR-A- 2 640 598
- US-A- 3 870 168

## Description

La présente invention concerne des installations de transfert de produits s'écoulant par gravité, tels que liquides, poudres, granulés ou petits produits manufacturés tels que dragées, tablettes, capsules de gélatine, etc... depuis un conteneur ou un conduit vers un autre conteneur ou conduit situé à un niveau inférieur, de même qu'un procédé de transfert pour ces produits.

L'invention concerne plus particulièrement le transfert de tels produits sans risque de contamination de l'atmosphère et réciproquement.

L'usage se généralise, à l'heure actuelle, en vue du transport et du stockage de matières très diverses en vrac, d'utiliser des conteneurs mobiles constitués par un récipient dont la partie inférieure a la forme d'une trémie présentant un orifice de déchargement et un moyen d'obturation de cet orifice. Ces conteneurs sont munis également d'un piètement, pour les soutenir et permettre leur transport par des engins de manutention.

Dans des installations de transfert connues, les récipients ou conteneurs à décharger sont amenés, par des moyens connus, au-dessus de la station de déchargement de manière à ce que leur orifice de déchargement, obturé par une vanne de type connu, soit situé au dessus de l'orifice supérieur d'un conduit desservant un appareillage, généralement situé dans un autre local, ou d'un autre récipient; la simple manoeuvre de la vanne du conteneur provoque l'écoulement des produits à transférer vers l'appareillage ou vers le second récipient.

De manière similaire, le conteneur comporte un orifice supérieur par lequel il peut être rempli à partir d'un appareillage via un conduit placé au-dessus de lui ou à partir d'un autre récipient.

En général, dans les installations de type connu les connexions entre conteneurs ou conduits s'effectuent manuellement.

Dans ces installations de type connu, une certaine quantité de particules des produits à transférer s'échappent dans l'atmosphère ambiante, au cours du déplacement du conteneur et du transfert du produit.

Les conséquences de cette pollution peuvent, dans certains cas, être graves, notamment lorsque ces installations visent l'alimentation de machines utilisées dans le domaine pharmaceutique et en particulier lorsqu'il y a risque de contamination croisée ou lorsqu'il y a manipulation de produits toxiques, parmi lesquels on peut citer les produits hormonaux, allergisants, cytostatiques ou autres.

Un autre problème qui existe notamment dans les secteurs pharmaceutique et alimentaire est d'assurer que des produits soient transportés et transférés dans des conditions de stérilité rigoureuse, d'asepsie ou de propreté très grande.

L'un des problèmes à résoudre, dans ce genre d'appareillage, consiste donc notamment, à réaliser à tout moment et en particulier durant les phases de connexion et de transfert, une étanchéité aussi complète que possible de chaque récipient ou conduit distinctement et entre chaque récipient ou conduit et les locaux environnants.

Un autre problème consiste à veiller à ce que les connexions et le transfert de produits s'effectuent sans contact direct avec le personnel et, de préférence, de façon entièrement automatisée.

Par la demande de brevet européen EP-A-0384826, on connaît une installation de transfert de produits s'écoulant par gravité, de l'orifice inférieure d'un récipient, dans des récipients ou machines situés à un niveau inférieur, par l'intermédiaire d'une goulotte verticale. L'installation comporte, d'une part, une première plaque montée sur des guides liés à la goulotte, coulissant entre une position de recouvrement de l'orifice supérieur de la goulotte et une position de dégagement de cet orifice, d'autre part, une seconde plaque montée, sur des guides fixés au conteneur à vider, coulissant relativement à celui-ci, entre une position de recouvrement de l'orifice inférieur du conteneur et une position de dégagement dudit orifice, des moyens étant prévus pour que, au cours du déplacement du conteneur dans un plan horizontal les mouvements des deux plaques coulissantes sur leurs guides respectifs soient synchrones mais en direction de sens opposés.

Sous sa forme de réalisation préférée les mouvements synchrones des deux plaques coulissantes sont assurés directement par un mouvement de translation horizontale du conteneur, et en particulier à l'aide d'aimants.

Un problème qui n'est pas résolu dans cette installation est que, bien que durant toutes les opérations de déplacement du conteneur et de transfert de produits, les orifices du conteneur et de la goulotte soient toujours recouverts, l'étanchéité n'est pas complète. En effet, un léger jeu doit être maintenu entre les orifices et les plaques qui les recouvrent pour permettre le coulissement de celles-ci. Il en résulte que de fines particules peuvent encore s'échapper dans l'air ambiant.

Il subsiste en outre une communication directe entre les deux orifices et l'atmosphère ambiante après que les plaques aient été retirées et avant que la jonction ne se fasse entre le conteneur et la goulotte.

Le document EP-A-0092008 décrit un dispositif de transfert par gravité de matériau en vrac d'un conteneur vers une trémie de déchargement. L'orifice inférieur du conteneur est fermé par un couvercle coulissant doublé d'une vanne papillon. Un manchon mobile permettant de réaliser une connexion étanche entre le conteneur et la trémie de déchargement étant dépourvue de moyens de fermeture, ce dispositif ne permet pas' d'éviter la dispersion d'une certaine quantité de matériau transféré vers l'atmosphère.

La demande de brevet FR-A-2 077 451 décrit un dispositif destiné à réaliser une liaison étanche entre un conteneur et une station de déchargement comportant un chassis doté d'une partie fixe et d'une partie mobile.

Le dispositif décrit dans FR-2 077 451 permet également de réaliser une liaison étanche entre les deux enceintes uniquement durant la phase du transfert; il ne permet pas d'éviter la contamination du milieu ambiant. L'herméticité du dispositif vis à vis de l'atmosphère n'est plus assurée dès que le contact entre la station et le conteneur est rompu; de surcroît, la station ne comporte pas de couvercle hermétique. Par ailleurs, si des particules s'infiltrent dans le dispositif au cours du transfert, elles peuvent être dispersées dans l'atmosphère ambiante.

DE-B-10 34 549 décrit un dispositif de jonction destiné à éviter la dissémination de poussière lors du transfert de matières solides entre une trémie et un véhicule de transbordement; ce dispositif comporte notamment un système d'aspiration de la poussière. Ce dispositif d'aspiration n'est toutefois pas séparé des deux récipients par une jonction étanche; en conséquence, il est en contact direct avec les matériaux transférés. Un tel dispositif n'évite pas la contamination entre la trémie, le véhicule et l'atmosphère, ce qui est contraire au but ici recherché.

FR-A-2 640 598 décrit un dispositif de transfert de produits, dans lequel les obturateurs de deux conteneurs sont couplés mécaniquement de façon à assurer un actionnement simultané.

L'herméticité de ce dispositif est assurée uniquement par la juxtaposition des deux obturateurs, ce qui est insuffisant pour éviter toute contamination avec l'atmosphère, des particules pouvant notamment se loger entre les faces externes des deux couvercles.

Le brevet US-A-3870168 décrit un dispositif pour le transfert de matériaux pulvérulents équipé d'un rideau d'air réduisant le risque qu'un nuage de particules pulvérulentes ne s'échappe lors du transfert de matériau. Un tel rideau d'air ne s'applique qu'à certains types de transfert et ne résout pas en soi le problème ici posé.

Ces différents dispositifs de transfert connus ne permettent pas non plus d'obtenir un transfert stérile.

En conséquence, de larges zones de travail doivent être considérées comme "contaminées". Il est donc nécessaire de prévoir, souvent à grands frais, des dispositifs pour séparer ces zones entre elles et pour protéger le milieu extérieur de la pollution (limitations d'accès, zones de décontamination, systèmes élaborés de filtration de l'air ambiant, etc.).

Il faut également fournir aux travailleurs évoluant dans ces zones des équipements de protection adéquats.

La présente invention a pour but de remédier à ces inconvénients et de fournir un dispositif permettant de réaliser une liaison rapide où le danger de pollution soit éliminé tant vers l'atmosphère ambiante que vers le produit transporté.

Un des buts de l'invention est aussi d'obtenir des conditions de transfert telles que la contamination par les produits manipulés puisse être confinée à l'intérieur des locaux de fabrication et des conteneurs de stockage.

La présente invention a aussi pour but de fournir une installation dans laquelle toutes les connexions et opérations peuvent être réalisées automatiquement et donc sans risque aucun pour les opérateurs.

L'invention a pour objet un dispositif de transfert sans contamination de produits s'écoulant depuis un récipient supérieur, ou conduit supérieur, comportant un orifice dirigé vers le bas, vers un récipient inférieur ou conduit inférieur situé à un niveau inférieur au précédent et comportant un orifice dirigé vers le haut; chaque orifice de ces récipients ou conduits est obturable par un couvercle; ce dispositif comporte
- une enceinte hermétique coiffant l'orifice d'un des récipients ou conduits, conformée de façon telle que l'orifice de l'autre récipient ou conduit puisse y être introduit, ladite enceinte comportant, du côté de cet autre récipient ou conduit, un accès obturable;
- des premiers moyens d'obturation pour isoler le volume intérieur de l'enceinte par rapport à l'atmosphère ambiante lorsqu'un autre récipient ou conduit n'y est pas raccordé et des moyens d'actionnement pour ces premiers moyens d'obturation;
- des deuxièmes moyens d'obturation pour isoler le volume intérieur de l'enceinte par rapport à l'atmosphère ambiante lorsque l'embouchure d'un autre récipient ou conduit y est introduite;
- des moyens aptes à ouvrir les couvercles respectifs des deux récipients ou conduits lorsque leurs orifices se trouvent en regard l'un de l'autre et que l'enceinte est isolée de l'atmosphère ambiante par les deuxièmes moyens d'obturation.

Ce dispositif comporte de manière très avantageuse des moyens d'injection et/ou d'aspiration d'un fluide gazeux dans le volume de l'enceinte. Ces moyens sont, de préférence, conformés de façon à créer un flux de gaz animé de turbulences. Ce flux de gaz est de préférence soumis à l'action de moyens de filtrage.

Un autre avantage important de cette disposition est que l'on peut procéder à un renouvellement complet de l'atmosphère intérieure de l'enceinte, en fonction des produits à transférer; on peut ainsi injecter de l'air sec dans le cas de produits hygroscopiques, de l'air stérile ou un gaz stérilisant pour la manipulation en conditions aseptiques, un gaz inerte pour des matières oxydables ou entraînant un danger d'explosion. Le faible volume intérieur de l'enceinte (comparé à celui des récipients ou des locaux desservis) rend cette disposition particulièrement efficace et économiquement avantageuse.

Suivant un mode avantageux, les couvercles respectifs des deux récipients ou conduits comportent des moyens de solidarisation mutuelle, de façon telle que les deux couvercles puissent être actionnés simultanément par un même moyen d'ouverture.

Les deuxièmes moyens d'obturation comportent avantageusement une collerette de forme appropriée pour être raccordée hermétiquement à l'accès de ladite enceinte.

Suivant un mode de réalisation avantageux pour l'entretien de l'installation, l'enceinte comporte, à l'opposé de son accès une trappe permettant d'accéder à l'intérieur de ladite enceinte.

L'orifice dirigé vers le bas du récipient supérieur ou du conduit supérieur est de préférence fermé par une vanne.

Dans ce cas, les moyens d'actionnement de ladite vanne, sont disposés de façon avantageuse au moins partiellement à l'intérieur de l'enceinte.

L'invention a également pour objet un conteneur comportant un récipient soutenu par un piètement, ledit récipient comportant à sa partie inférieure une trémie, ladite trémie se terminant vers le bas par une extrémité percée d'un orifice et fermée par un couvercle mobile, apte à être connectée à un dispositif tel que décrit ci-dessus et comportant un moyen d'obturation apte à coopérer avec des moyens correspondants pour isoler le volume intérieur de l'enceinte par rapport à l'atmosphère ambiante lorsque l'extrémité de la trémie est introduite dans la dite enceinte.

Ce conteneur comporte de préférence également à sa partie supérieure un orifice dont l'embouchure est dirigée vers le haut, fermé par un couvercle mobile, apte à être connecté à un dispositif tel que décrit ci-dessus et comportant un moyen d'obturation apte à coopérer avec un moyen correspondant situé sur l'enceinte pour isoler le volume intérieur de la dite enceinte par rapport à l'atmosphère ambiante lorsque l'embouchure de son orifice est introduite dans la dite enceinte.

L'invention a également pour objet un procédé pour transférer sans contamination des produits s'écoulant par gravité depuis un récipient supérieur ou conduit supérieur comportant un orifice dont l'embouchure est dirigée vers le bas, vers un récipient inférieur ou conduit inférieur situé à un niveau inférieur au premier et comportant un orifice dont l'embouchure est dirigée vers le haut, chacun de ces orifices étant obturable par un couvercle mobile. Ce procédé comporte les opérations suivantes:
a) amener axialement en regard l'un de l'autre les orifices respectifs des récipients ou conduits
b) prévoir une enceinte couvrant l'orifice d'un premier conteneur ou conduit, le volume intérieur de la dite enceinte étant séparé de l'atmosphère ambiante par des premiers moyens d'obturation
c) ouvrir les premiers moyens d'obturation de l'enceinte
d) introduire l'embouchure de l'orifice du deuxième conteneur ou conduit dans l'enceinte
e) séparer le volume intérieur de l'enceinte de l'atmosphère ambiante par des deuxièmes moyens d'obturation solidaires respectivement de l'enceinte et de l'embouchure du deuxième conteneur ou conduit
f) ouvrir les couvercles respectifs des deux récipients ou conduits
g) déplacer axialement l'embouchure de l'orifice du premier conteneur ou conduit de manière telle qu'elle se raccorde hermétiquement à l'embouchure du deuxième conteneur ou conduit
h) laisser s'écouler les produits à transférer
i) répéter les opérations ci-dessus en sens inverse après transfert d'une quantité adéquate de produits

Dans ce procédé on fait passer avantageusement un flux de gaz dans l'enceinte après l'opération (d) ou après l'opération (g). Suivant un mode d'opération particulier, le passage de gaz est prolongé pendant le déroulement des opérations (e), (f) et (g).

Le déplacement axial de l'orifice du premier récipient ou conduit (opération e) s'effectue avantageusement grâce à une chambre gonflable solidaire d'un rebord de l'embouchure dudit premier récipient ou conduit.

L'écoulement du produit (opération h) s'effectue de préférence par l'actionnement d'une vanne disposée à la partie inférieure du récipient ou conduit supérieur.

Un autre avantage de l'invention est d'améliorer considérablement les conditions de travail et réduire simultanément les coûts liés à la réduction de la pollution d'un complexe industriel.

Ces mesures s'appliquent notamment au transfert de produits toxiques, allergisants, à des produits hormonaux, cytostatiques, stériles et à des matières radio-actives.

Le dispositif et le procédé suivant l'invention se révèlent également avantageux dans le cas de transfert de poudres ou de mélanges explosifs, notamment les sucres, les céphalosporines.

D'autres caractéristiques et avantages de l'invention ressortiront de la description qui va suivre, d'une forme possible de réalisation, référence étant faite aux dessins annexés dans lesquels:

Les Figs. 1 et 2 sont des vues schématiques en coupe d'un contenant suivant l'art antérieur desservant un conduit, sans dispositif de transfert adéquat.

La Fig. 3 est une vue générale d'une coupe suivant un plan vertical d'un conteneur équipé du dispositif suivant l'invention.

La Fig. 4 est une vue en coupe suivant un plan vertical perpendiculaire à celui de la Fig. 3 (avec interruption) du même conteneur.

La Fig. 5 est une vue en coupe horizontale suivant le plan V-V du conteneur de la Fig. 4.

La Fig. 6 est une vue schématique en coupe suivant le même plan qu'à la Fig. 4 du dispositif de transfert ouvert pour la mise en place de l'orifice inférieur d'un conteneur.

La Fig. 7 est une vue schématique en coupe suivant un plan perpendiculaire au plan de la Fig. 6 du dispositif dans lequel est inséré l'orifice inférieur d'un conteneur.

La Fig. 8 est une vue en plan d'une coupe suivant le plan VIII-VIII de la Fig. 10, le conteneur étant en position.

La Fig. 9 est une vue dans le même plan que à la Fig. 4, le dispositif étant prêt pour le transfert.

La Fig. 10 est une vue générale en coupe verticale du dispositif dans sa plus grande longueur.

Les Fig. 11 à 15 sont des vues schématiques des différentes étapes du procédé d'ouverture du dispositif de transfert suivant l'invention.

La Fig. 16 est une vue schématique montrant un transfert de produits par l'orifice supérieur d'un conteneur.

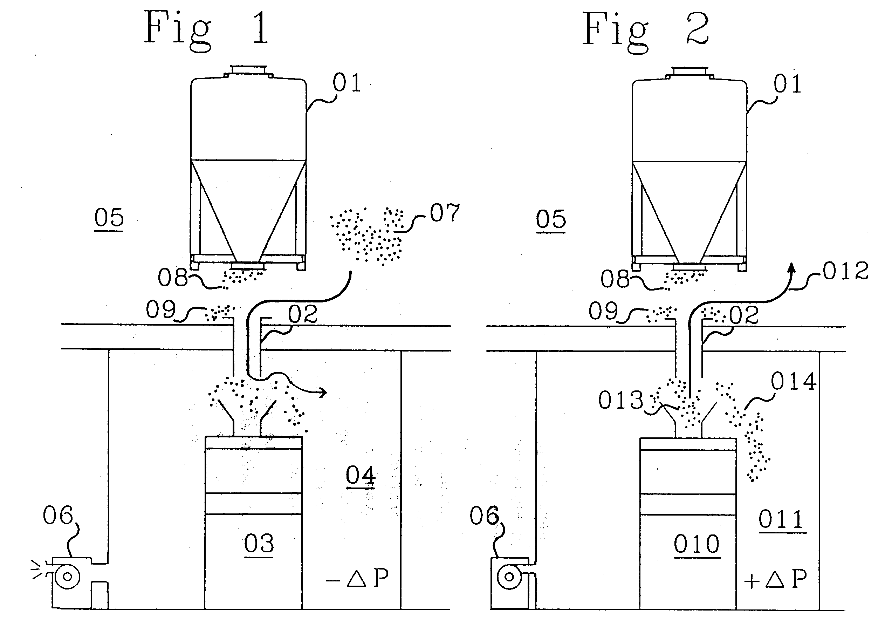

Les Figs. 1 et 2 illustrent une série de problèmes de pollution et de contamination typiques qui se posent lors d'un transfert de produits et qu'aucun des dispositifs suivant l'art antérieur ne peut résoudre totalement. Pour éviter les confusions, avec le dispositif suivant la présente invention, la numérotation des éléments relatifs aux Figs. 1 et 2 est précédée d'un -0-.

Le conteneur suivant l'art antérieur 01 est représenté juste après un transfert de produits vers un conduit 02 desservant un appareillage 03 situé dans un local 04 séparé du lieu de déchargement 05.

Pour éviter notamment que des particules toxiques ou des micro-organismes pathogènes ne puissent s'échapper du local 04, l'atmosphère de ce local 04 est régulée par un appareillage 06 et maintenue constamment en dépression (- Δ p) par rapport à celle du local de déchargement 05.

Le transfert étant terminé, le conteneur 01 est déconnecté du conduit 02 avec lequel il avait été uni de façon plus ou moins étanche.

Le conduit 02 étant dépourvu de moyen de fermeture adéquat, les particules étrangères 07 en suspension dans l'atmosphère du lieu de transfert 05 sont aspirées dans l'atmosphère contrôlée du local 04, qu'elles viennent contaminer.

Des particules adhérentes 08 subsistant sur la face externe de la base du conteneur suivant l'art antérieur 01 sont dispersées dans le local de transfert 05. Des particules 09 adhérant à l'embouchure du conduit 02 contaminent également l'atmosphère du local 05, s'altèrent éventuellement à son contact et sont donc susceptibles de contaminer lors d'un transfert ultérieur les produits alimentant l'appareillage 03 et le local 04.

La Fig. 2 montre un conteneur suivant l'art antérieur 01 juste après un transfert par un conduit 02 vers un appareillage 010 situé dans un "local propre" 011.

Pour éviter que des poussières, particules et micro-organismes en provenance du lieu de transfert 05 ne contaminent l'atmosphère "propre" du local 011, celle-ci est traitée et maintenue en surpression (+ Δ p) par rapport à celle du lieu de transfert 05 par un appareillage 06.

Le transfert étant terminé, le conteneur 01 est détaché du conduit 02.

Ce conduit 02 étant dépourvu de moyen de fermeture adéquat, un flux 012 chargé de particules 013 de produit transféré et de substances 014 produites ou dégagées par l'appareillage 010 est expulsé vers l'atmosphère du lieu de transfert 05.

Les particules adhérentes 08 subsistant sur la face extérieure à la base du conteneur et les souillures 09 adhérant à l'embouchure du conduit 02, comme expliqué à la Fig 1, sont susceptibles de polluer l'atmosphère du lieu de transfert 05. En outre, lors d'un transfert ultérieur, ces particules 08, éventuellement altérées et les souillures 09 risquent d'être réintroduites dans l'atmosphère "propre" du local 011.

Il est évident par ailleurs que, durant le transfert lui-même, le produit transféré, éventuellement en conditions aseptiques, dans le conteneur 01 ne peut pas être mis en contact avec l'atmosphère souillée du lieu de transfert 05.

Ces mêmes phénomènes se présentent, inversés, lorsqu'il faut transférer un produit fini depuis un des locaux 04 ou 011 vers un conteneur 01 situé en contrebas.

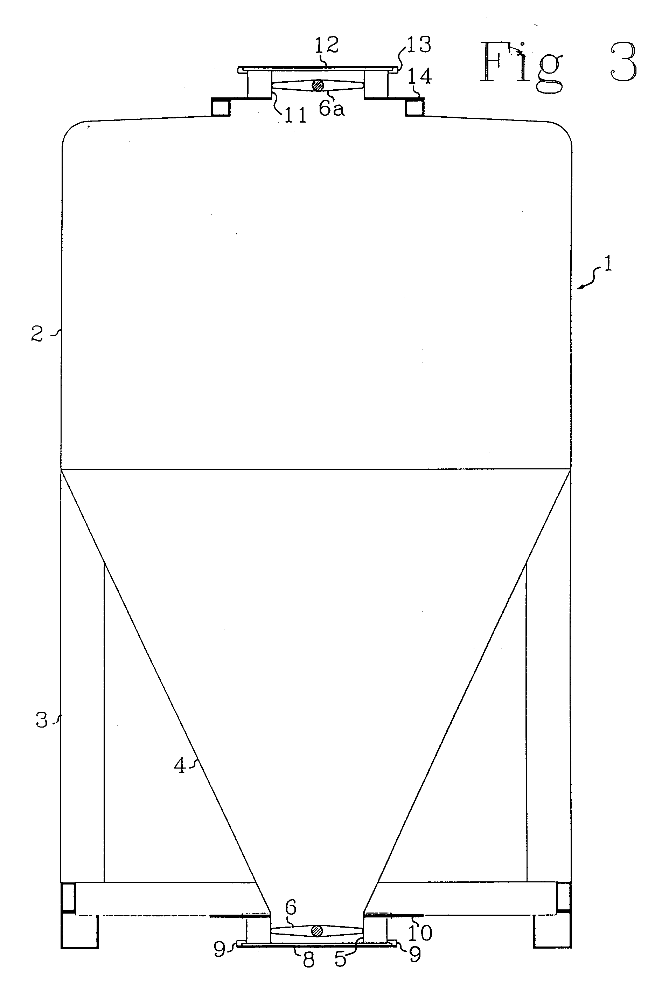

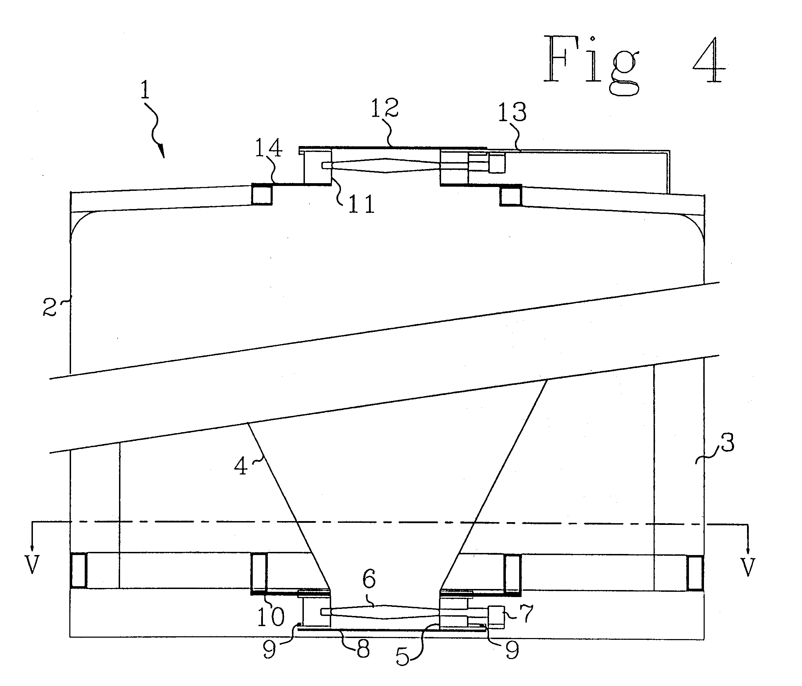

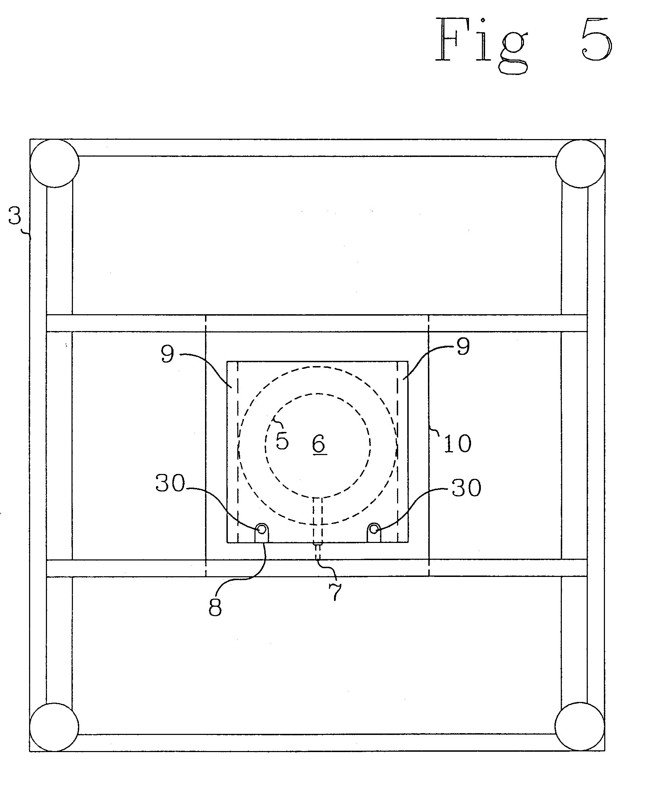

Les Figs. 3 à 5 montrent un conteneur 1 pour des produits s'écoulant par gravité équipé pour être utilisé avec le dispositif de transfert suivant l'invention. Le conteneur 1 comporte un récipient 2 quadrangulaire à coins arrondis soutenu par un bâti 3 qui forme le piètement et permet sa manutention. La partie inférieure du récipient forme une trémie 4. L'extrémité inférieure de la trémie 4 comporte l'embouchure d'un orifice 5 obturable qui forme la première partie du dispositif de transfert suivant l'invention. Cet orifice 5 est fermé par une vanne 6, qui dans cet exemple de réalisation est une vanne papillon 6. Celle-ci est actionnée par une clé 7 qui fait saillie latéralement. Le côté aval de la vanne 6 est obturé de manière étanche par un couvercle 8 monté sur des coulisses 9. Une collerette 10 dont le rôle sera expliqué ci-après fait le tour de l'embouchure de la trémie 4, en substance parallèlement au couvercle 8 et en retrait par rapport au plan de ce couvercle 8. Les dimensions extérieures de la collerette 10 sont supérieures aux dimensions du couvercle 8.

La partie supérieure du conteneur 1 affecte la même configuration que la partie inférieure mais de manière inverse.

En effet, le conteneur 1 comporte à sa partie supérieure, l'embouchure d'un orifice 11 dirigé vers le haut, fermée également par une vanne papillon 6a et par un couvercle étanche 12 monté sur des coulisses 13. Une collerette 14 située en retrait vers le bas par rapport au couvercle 12, s'étend en substance parallèlement au couvercle 12 autour de l'embouchure de l'orifice 11. Les dimensions extérieures de la collerette 14 sont supérieures aux dimensions extérieures du couvercle 12.

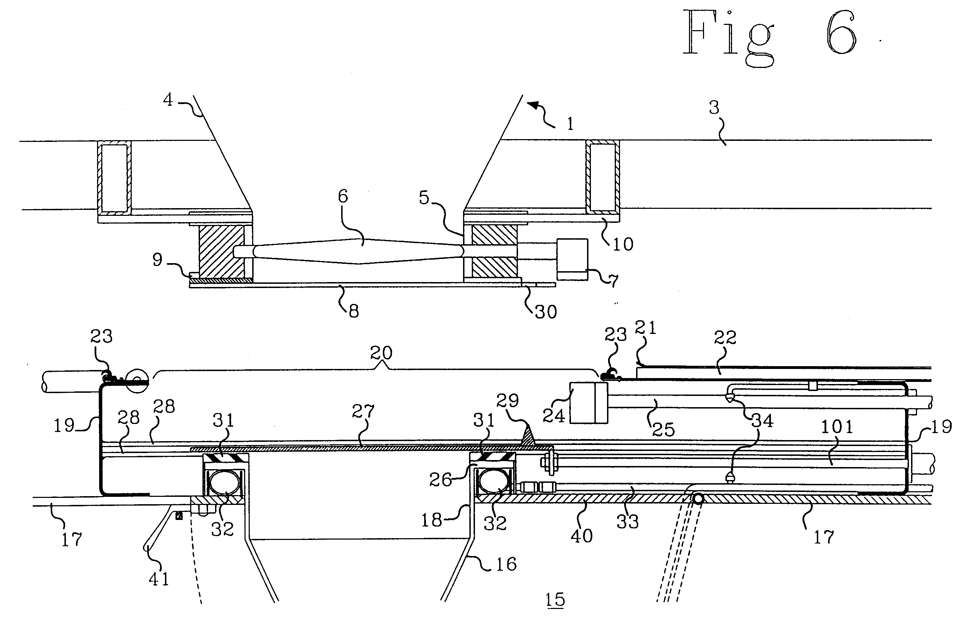

Dans l'exemple particulier décrit dans les Figs. 6 à 15, le contenu du conteneur 1 est destiné à être transféré dans un local de traitement 15 se trouvant à un étage inférieur. Un conduit 16 relié au local de traitement 15 traverse la plaque de base 17 séparant le lieu de transfert et le local de traitement 15.

On notera que le conduit 16 est généralement raccordé à un appareillage situé dans un autre local que le lieu de transfert; il peut cependant aussi bien alimenter d'autres dispositifs, des récipients etc...

Les détails du dispositif de transfert sont montrés plus particulièrement dans les Fig. 6 à 10.

L'embouchure de l'orifice supérieur 18 du conduit 16 est coiffée d'une enceinte 19, laquelle est fermée vers le bas par la plaque 17. L'enceinte 19 comporte à sa partie supérieure un accès 20 dans lequel l'embouchure de la trémie 4 du conteneur 1 peut être introduite verticalement.

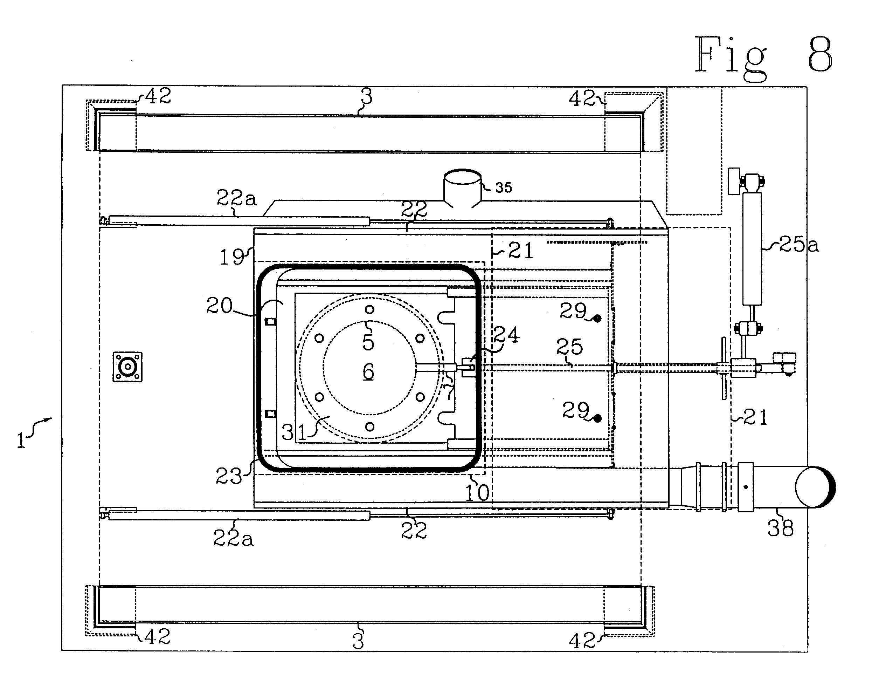

L'accès 20 de l'enceinte 19 est obturable par un premier moyen d'obturation 21, en l'occurrence le couvercle mobile 21 (figuré en pointillé en position ouverte à la Fig. 8) monté sur des coulisses 22. Un joint 23, fixé sur le pourtour de l'accès 20, assure l'étanchéité entre l'atmosphère ambiante et le volume intérieur de l'enceinte 19 lorsque le couvercle 21 est fermé.

Deux vérins 22a visibles à la Fig. 8 sont disposés latéralement le long de l'enceinte 19 et assurent le déplacement sur commande du couvercle 21.

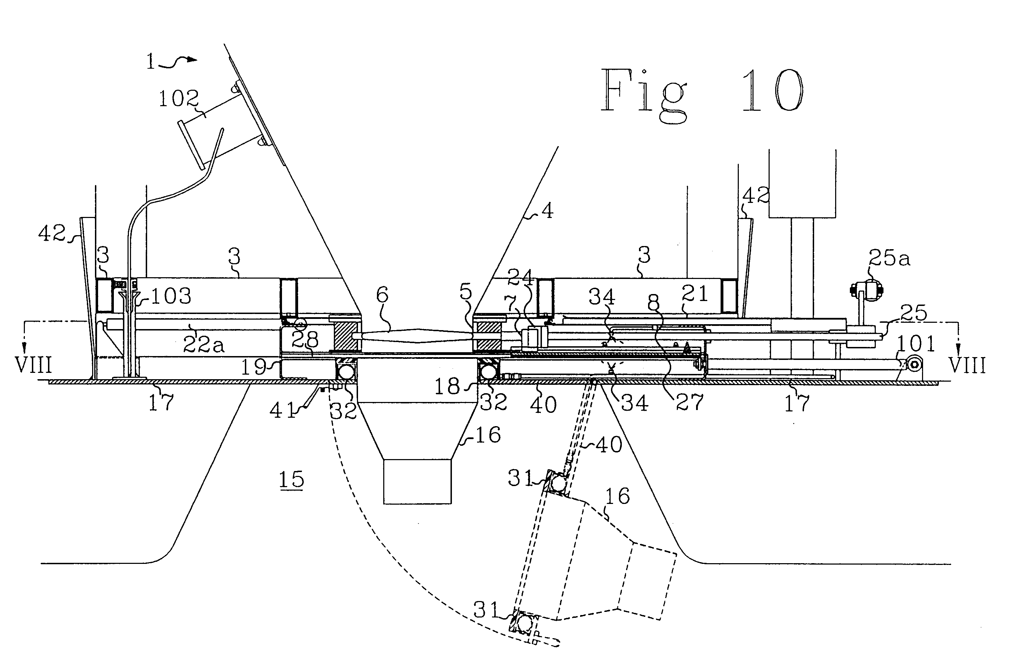

Des moyens d'actionnement de la vanne du conteneur sont disposés à l'intérieur même de l'enceinte 19. Ces moyens comportent un système d'accouplement 24 coopérant avec la clé 7 de la vanne 6. Le système d'accouplement 24 est relié par une tige à pivotement axial 25 à un vérin 25a. Ce dernier est situé en dehors de l'enceinte 19 comme on le voit aux Fig. 8 et 10.

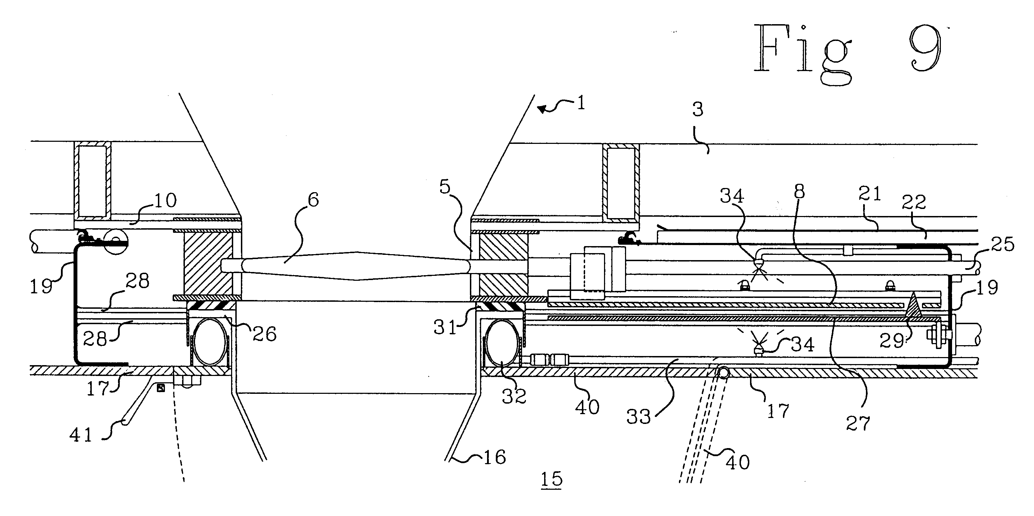

Comme on le voit à la Fig. 6, l'embouchure du conduit 16 est entourée d'un rebord horizontal 26 et elle est obturée par un couvercle mobile 27, monté sur des coulisses 28. Ce couvercle 27 porte des ergots 29 aptes à coopérer avec des logements 30 correspondants ménagés dans le couvercle 8 du conteneur 1. De cette façon, lorsque le couvercle 27 est déplacé (comme montré à la Fig. 9) on obtient une ouverture simultanée des deux couvercles 8 et 27.

Un joint périphérique 31 monté sur le rebord 26 du conduit 16 assure l'étanchéité entre le conduit 16 et son couvercle 27 lorsque celui-ci est fermé. Sous le rebord 26 du conduit 16 est disposée une chambre périphérique gonflable 32, raccordée à un tuyau d'alimentation en air comprimé 33.

Comme montré aux Figs. 9 et 10, lorsque la chambre gonflable 32 est mise sous pression, elle engendre une poussée vers le haut qui s'applique au rebord 26 du conduit 16 et entraîne un déplacement vertical de l'embouchure vers le haut, ce qui permet d'obtenir un contact hermétique entre l'extrémité de la trémie 4 et le conduit 16.

L'enceinte 19 comporte également des premiers moyens d'injection 34, qui ont ici la forme de deux tuyères 34, aptes à envoyer un fluide sur les faces inférieures et supérieures des couvercles solidarisés 8, 27 lorsqu'ils sont retirés, de façon à les débarrasser de toute trace des produits transférés ou de particules issues du milieu ambiant.

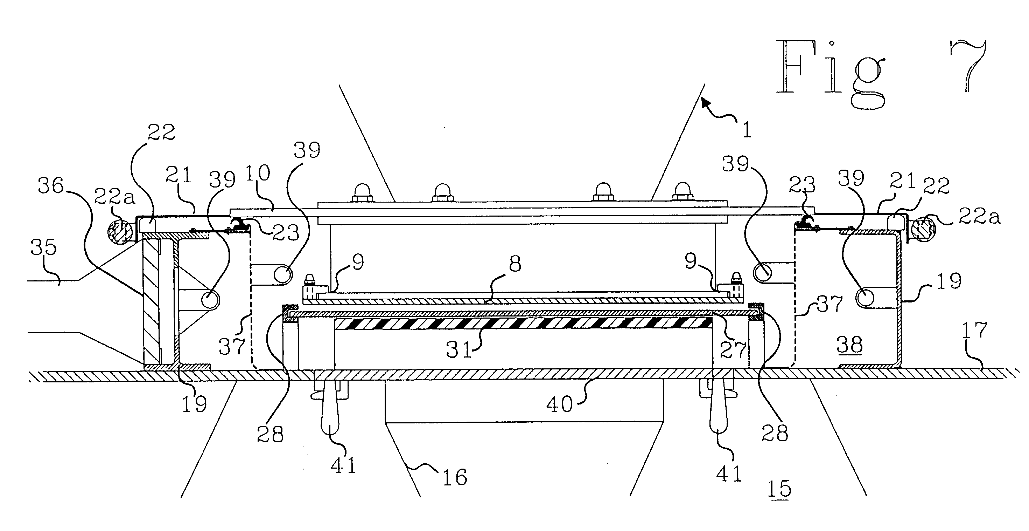

Le dispositif suivant l'invention comporte par ailleurs d'autres moyens d'injection d'un flux gazeux dans l'enceinte 19. Dans l'exemple montré aux Fig. 7 et 8, une entrée de gaz 35 communique avec l'intérieur de l'enceinte 19 par l'intermédiaire d'un filtre 36 et d'une plaque perforée 37.

Du côté opposé de l'enceinte 19, est disposée une autre plaque perforée 37 communiquant avec une sortie d'air 38, de façon à ce que les zones de contact puissent être balayées par le flux gazeux qui traverse l'enceinte 19.

La sortie d'air 38 est reliée par un moyen d'aspiration (non représenté) à une installation de traitement ou de filtration du flux gazeux (non représentée) qui reprend les particules susceptibles de s'être échappées. Des tubes à rayonnement ultra-violet 39 sont disposés en complément sur le passage du flux gazeux de façon à renforcer la stérilisation à l'intérieur de l'enceinte 19 durant et après le processus de transfert.

Le volume intérieur de l'enceinte 19 étant très faible au regard de celui du récipient 2 et au regard de celui du récipient ou du local desservi par le conduit 16, il est possible de traiter économiquement ce volume intérieur confiné pendant le transfert ou même après le transfert.

On peut ainsi récupérer des particules qui se seraient échappées ou les neutraliser au prix d'une très faible consommation d'énergie. Ces "particules échappées" au cours d'un transfert pouvant être, par exemple, des micro-organismes pathogènes, ou des poussières toxiques on comprend que le dispositif de transfert suivant l'invention permet de les éliminer de façon bien plus efficace que s'il fallait traiter l'ensemble de l'atmosphère du lieu dans lequel se déroule le transfert.

Le dispositif de transfert étant d'une étanchéité totale, il permet de traiter sans problème des poudres formant des mélanges détonnant avec l'air (notamment le sucre pulvérisé).

Comme on le voit mieux à la Fig. 10, une trappe 40 est aménagée sur la face de l'enceinte 19 communiquant avec le local de traitement 15. Cette trappe peut être déverrouillée en actionnant des moyens de verrouillage manuels 41. Cette particularité permet d'accéder à l'intérieur de l'enceinte 19 (par exemple, pour le nettoyage) à partir du local 15 sans risque de contamination vers l'atmosphère lorsque le couvercle extérieur 21 de l'enceinte 19 est fermé.

Comme on peut le remarquer dans les Fig. 8 et 10, un centrage rigoureux du conteneur 1 sur l'enceinte 19 est obtenu par des moyens de guidage 42 dans lesquels le bâti 3 du conteneur 1 vient se loger.

Le piétement repose sur ces moyens de guidage 42 de façon à y reporter la quasi-totalité du poids du conteneur 1. La collerette 10 est appliquée à ce moment contre le joint 23 à l'enceinte 19 avec une force juste suffisante pour assurer une bonne étanchéité. Durant tout le temps où l'extrémité de la trémie 4 est introduite dans l'enceinte 19, le joint 23 et la collerette 10 opèrent comme deuxièmes moyens d'obturation pour isoler le volume intérieur de l'enceinte 19 de l'atmosphère ambiante. Aucune force verticale appréciable due au poids du conteneur 1 n'est appliquée sur le couvercle 8 qui, tout en étant quasiment jointif au couvercle 27, peut glisser sans contrainte le long de ses coulisses 9.

Il est évident que l'on peut utiliser d'autres moyens d'obturation pour isoler le volume intérieur de l'enceinte de l'atmosphère pendant cette phase. Ainsi, l'extrémité de la trémie peut être conformée aux dimensions de l'accès 20 et/ou un joint souple (notamment un joint gonflable) peut assurer l'étanchéité de l'enceinte de façon similaire. On peut également utiliser, par exemple, une ouverture à iris (au lieu du couvercle coulissant 21) qui s'ajuste aux dimensions de l'extrémité de la trémie.

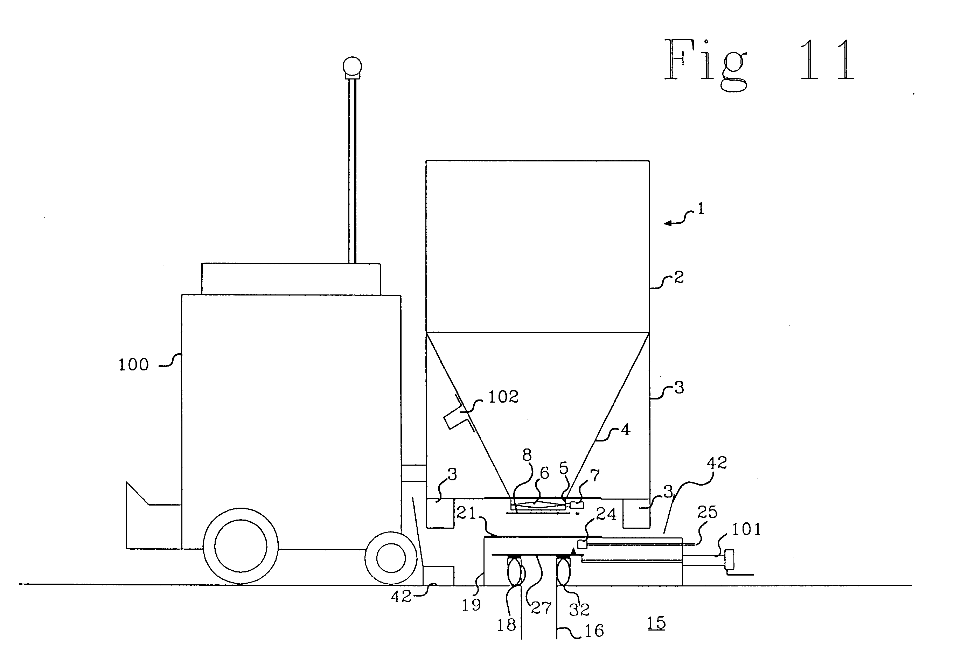

Aux Fig. 11 à 15 sont représentées les différentes étapes du procédé de transfert suivant l'invention.

Toutes les étapes peuvent être commandées soit manuellement, soit réalisées automatiquement à distance sans nécessiter la présence de personnel sur les lieux des opérations. De plus toutes les opérations sont réalisées sans contact aucun du produit avec l'ambiance extérieure.

A l'étape 1, représentée à la Fig. 11, le conteneur 1 est transporté par un engin de manutention 100, en l'occurrence un véhicule guidé automatiquement (AGV). Lorsque cet engin 100 arrive devant la station de transfert correspondant au local de traitement 15 qui lui est assigné, il place automatiquement le conteneur 1 en position, l'orifice 5 du conteneur 1 étant amené à la verticale de l'orifice 18 de la conduite 16 enfermée dans l'enceinte 19 de la station de déchargement.

Après vérification de l'état de fermeture du couvercle 21 de l'enceinte 19, de l'état gonflé de la chambre circulaire gonflable 32 et de la position fermée du système d'accouplement 24 de la valve 6, l'engin 100 descend progressivement le conteneur 1, le conteneur 1 étant également guidé par les moyens de positionnement 42 coopérant avec le bâti 3 formant piètement.

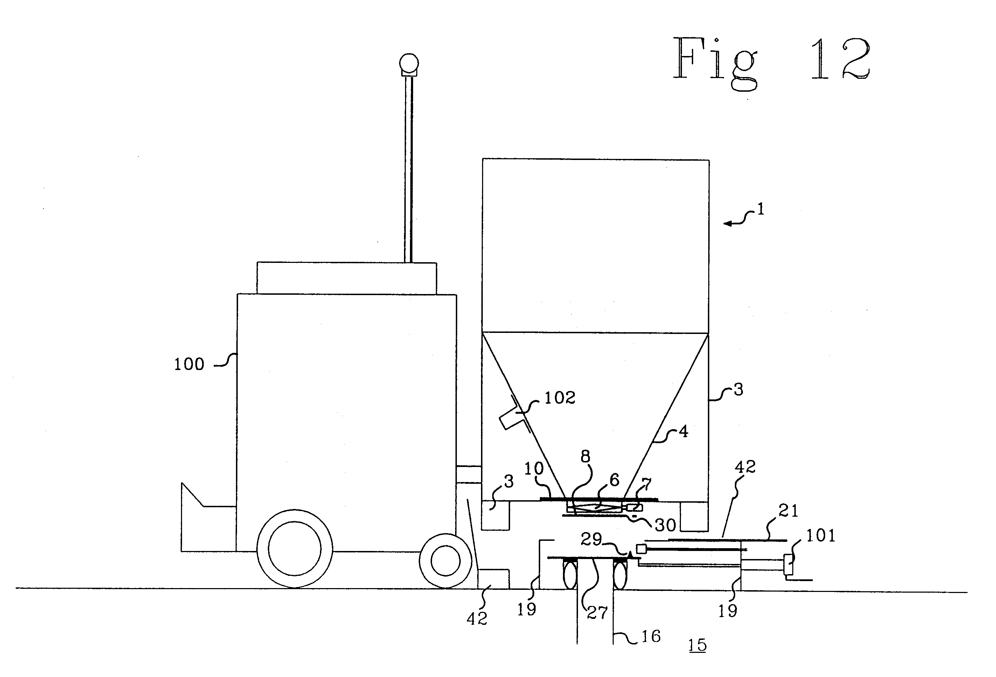

A l'étape 2, représentée à la Fig. 12, un détecteur activé par la descente du conteneur 1, commande l'ouverture des premiers moyens d'obturation de l'enceinte 19, réalisée ici par coulissement de son couvercle 21.

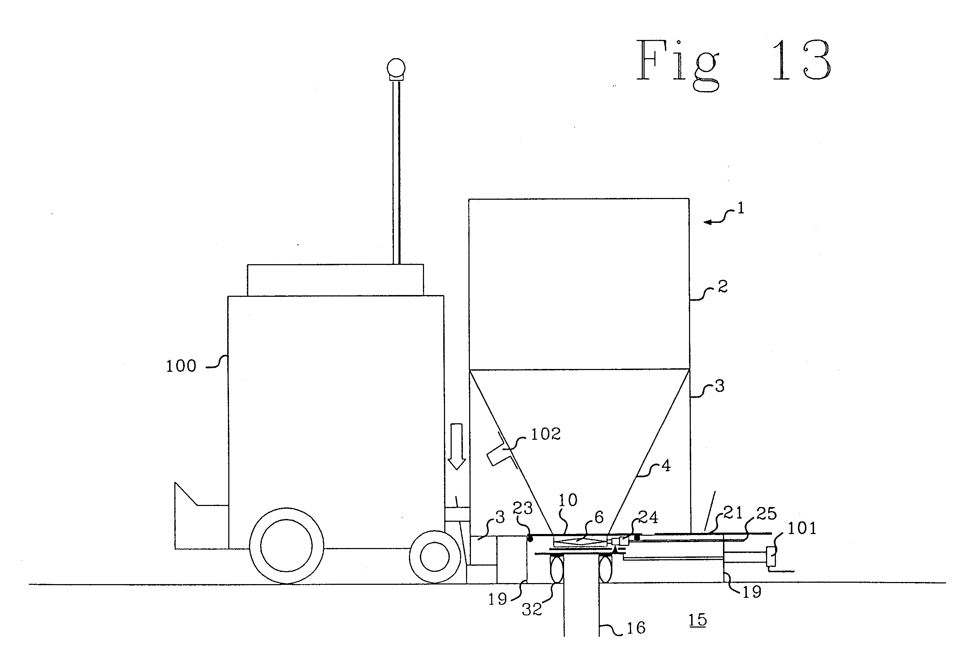

A l'étape 3, représentée à la Fig. 13, le couvercle 21 est complètement retiré de l'accès 20 de l'enceinte 19. Le conteneur 1 est descendu par l'engin 100 jusqu'à venir en appui sur son piètement 3. Des deuxièmes moyens d'obturation de l'enceinte entrent alors en jeu. En effet, la collerette 10 du conteneur 1 repose alors sur le joint d'étanchéité 23 de l'enceinte 19 et procure ainsi une fermeture étanche de cette dernière. La bonne exécution de l'étape 3 est importante en ce sens que l'étanchéité ainsi obtenue permettra de réaliser toutes les manoeuvres ultérieures dans une atmosphère rigoureusement contrôlée. Comme signalé plus haut, d'autres moyens connus peuvent être utilisés pour isoler transitoirement le volume de l'enceinte de l'atmosphère extérieure.

Par le même mouvement de descente du conteneur, les ergots 29 (mieux représentés à la Fig. 6) montés sur le couvercle 27 du conduit 16 s'insèrent dans les logements 30 correspondants du couvercle 8 du conteneur 1. Durant le même mouvement vertical la clé 7 de la valve 6 s'insère dans le système d'accouplement 24.

L'engin 100 peut à ce stade se détacher du conteneur et s'éloigner.

Un flux gazeux est alors envoyé dans l'enceinte 19. Ce flux peut, au choix, être simplement de l'air ambiant filtré ou de l'air à taux d'humidité éventuellement contrôlé ou un gaz stérile ou stérilisant ou tout autre gaz approprié. Le balayage et/ou le contact avec le gaz est maintenu durant le laps de temps requis pour exercer son effet sanitaire, de dépoussiérage, de stérilisation ou autre.

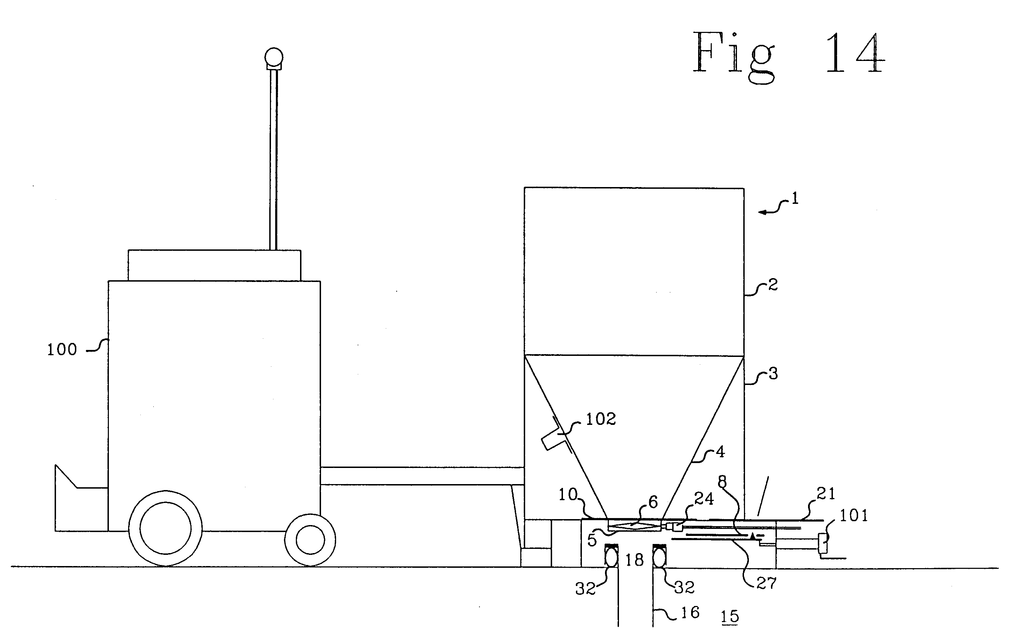

A l'étape 4 représentée à la Fig. 14, on relâche la pression dans la chambre gonflable 32 de manière à permettre le déplacement latéral des couvercles respectifs 8, 27 des deux orifices 5, 18. Les couvercles 8, 27 découvrent simultanément leur orifice respectif 5, 18 par un mouvement de coulissement actionné par un vérin 101.

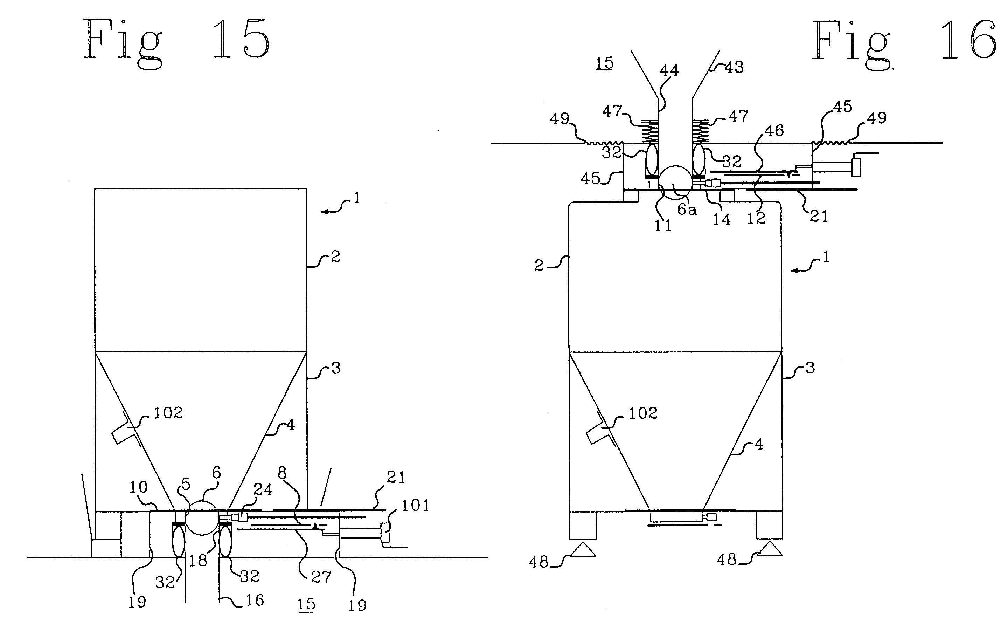

A l'étape 5, représentée à la Fig. 15, la chambre circulaire 32 est regonflée et l'embouchure du conduit 16 est entraînée vers le haut contre l'extrémité de la trémie 4, assurant de cette manière un accouplement étanche. Selon les cas, une nouvelle phase de balayage par le flux gazeux peut encore être réalisée à ce stade.

Le dispositif est alors prêt pour le transfert du produit. L'opérateur peut alors commander l'ouverture de la vanne papillon 6, par rotation du système d'accouplement 24.

L'emploi d'une vanne papillon 6 permet de donner à l'ensemble du dispositif de transfert une très faible hauteur tout en maîtrisant facilement le débit de matières déversées. Il est cependant évident qu'en fonction des impératifs, on peut également utiliser d'autres types de vannes, et notamment des vannes à tiroir.

De manière particulière et indépendante, le dispositif comporte un vibrateur pneumatique 102 représenté à la Fig. 10, facilitant l'écoulement du produit. Le positionnement rigoureux du conteneur 1 sur la station de transfert permet de prévoir une connexion automatique 103 lorsque le conteneur 1 est mis en place.

Les opérations inverses ont lieu après transfert du produit ou de la quantité désirée de produit :
- fermeture de la valve 6,
- balayage de l'enceinte 19 par un flux gazeux,
- dégonflement de la chambre circulaire 32 entraînant la descente de l'orifice 18 de la conduite 16,
- fermeture simultanée des couvercles 8, 27 par actionnement du vérin 101,
- gonflement de la chambre circulaire 32, ce qui assure une étanchéité parfaite entre le couvercle coulissant 27 et le joint périphérique 31 de la conduite 16,
- balayage réitéré de l'enceinte 19,
- transport vertical du conteneur 1 par un engin de manutention 100,
- fermeture de l'enceinte 19 par actionnement des premiers moyens d'obturation, soit ici par coulissement de son couvercle 21.

Le dispositif suivant l'invention permet également de répéter le balayage et/ou la stérilisation du volume intérieur de l'enceinte 19 entre deux opérations de transfert (en fonction du temps s'écoulant entre deux opérations) ou également après un temps d'arrêt de l'installation.

Les différentes étapes d'accouplement et de transfert de produits décrites ci-dessus s'appliquent de manière tout à fait similaire, au cas où un conteneur 1 est rempli par son orifice supérieur 11 à partir d'un conduit 43 qui le surplombe, tel qu'illustré à la Fig. 16.

Le conduit 43 est par exemple relié à l'aval d'un appareillage situé dans un local de traitement 15. Il comporte un orifice 44 dont l'embouchure est dirigée vers le bas, et est généralement muni d'une vanne (non représentée) commandant ou régulant le débit du produit à transférer et d'un couvercle hermétique 46. L'orifice 44 du conduit 43 est coiffé d'une enceinte 45 similaire à l'enceinte 19 précédemment décrite. L'enceinte 45 comporte les mêmes éléments que l'enceinte 19 mais en position haut-bas inversée.

Dans ce mode de réalisation, le conteneur 1 vient s'accoupler au conduit 43 dans ladite enceinte 45 par un mouvement ascendant, les différentes étapes étant identiques à celles décrites précédemment bien que l'orientation haut-bas soit inversée. Ainsi, il peut être nécessaire de prévoir des moyens de rappel 47 pour faire remonter l'embouchure 44 du conduit 43.

Il est évident qu'en fonction de la configuration de l'installation, on peut prévoir que le conteneur 1 vienne s'accoupler au conduit 43 également par une translation horizontale ainsi que par une quelconque combinaison de mouvements rotatifs.

A tout moment, que le conteneur 1 soit présent ou non, que l'on soit en phase d'accouplement, de transfert de produits ou de désaccouplement, il apparaît clairement que le local de traitement 15, dans lequel s'effectue la manipulation du produit, reste toujours isolé de façon parfaitement étanche par rapport au local où s'effectue le stockage et le transfert de ce produit dans le conteneur 1.

Le conteneur 1 peut être combiné avec un dispositif de mesure de poids 48 permettant de contrôler directement les quantités de produit qui y sont déversées dans des stations de pesage. Pendant la pesée, l'enceinte 45 et le conduit 43 sont solidaires du conteneur 1 et font donc partie de la tare. Afin de maintenir l'étanchéité du local tout en permettant un mouvement libre de la balance, la jonction avec le plancher se fait par un joint souple 49.

## Revendications

1. Dispositif de transfert sans contamination de produits s'écoulant par gravité depuis un récipient supérieur (1) ou conduit supérieur (43) comportant un orifice (5, 44) dont l'embouchure est dirigée vers le bas vers un récipient inférieur (1) ou conduit inférieur (16) situé à un niveau inférieur au précédent et comportant un orifice (18, 11) dont l'embouchure est dirigée vers le haut, chacun de ces orifices (5, 44, 18, 11) de ces récipients (1, 1) ou conduits (16, 43) étant obturable par un couvercle mobile (8, 46, 27, 12), caractérisé en ce que ledit dispositif comporte
- une enceinte (19, 45) hermétique coiffant l'orifice (18, 44) d'un des récipients (1, 1)ou conduits (16, 43), conformée de façon telle que l'embouchure de l'orifice (5, 11) de l'autre récipient (1, 1) ou conduit (16, 43) puisse y être introduite, ladite enceinte (19, 45) comportant, du côté de cet autre récipient (1) ou conduit (16, 43), un accès (20) obturable;
- des premiers moyens d'obturation (21) pour isoler le volume intérieur de l'enceinte (19, 45) par rapport à l'atmosphère ambiante lorsqu'un autre récipient (1) ou conduit (16, 43) n'y est pas raccordé et des moyens d'actionnement (22a) pour ces premiers moyens d'obturation (21);
- des deuxièmes moyens d'obturation (10, 14) pour isoler le volume intérieur de l'enceinte (19, 45) par rapport à l'atmosphère ambiante lorsque l'embouchure d'un autre récipient (1) ou conduit (16, 43) y est introduite;
- des moyens aptes à ouvrir les couvercles respectifs (8, 27, 12, 46) des deux récipients (1) ou conduits (16, 43) lorsque leurs orifices (5, 18, 11, 44) se trouvent en regard l'un de l'autre et que l'enceinte (19, 45) est isolée de l'atmosphère ambiante par les deuxièmes moyens d'obturation (10, 14)

2. Dispositif suivant la revendication 1, caractérisé en ce qu'il comporte des moyens d'injection (34) d'un fluide gazeux dans le volume intérieur de l'enceinte (19, 45).

3. Dispositif suivant l'une quelconque des revendications 1 et 2, caractérisé en ce qu'il comporte des moyens d'aspiration d'un fluide gazeux reliés au volume intérieur de l'enceinte (19, 45).

4. Dispositif suivant l'une quelconque des revendications précédentes, caractérisé en ce que les couvercles respectifs (8, 27, 12, 46) des deux récipients (1) ou conduits (16, 43) comportent des moyens de solidarisation mutuelle, de façon telle que les deux couvercles (8, 27, 12, 46) puissent être actionnés simultanément par un même moyen d'ouverture (101).

5. Dispositif de transfert suivant l'une quelconque des revendications précédentes, caractérisé en ce que les deuxièmes moyens d'obturation comportent une collerette (10,14) de forme appropriée pour être raccordée hermétiquement à l'accès (20) de ladite enceinte (19, 45).

6. Dispositif suivant la revendication 5, caractérisé en ce que l'enceinte (19, 45) comporte, à l'opposé de son accès (20) une trappe (40) permettant d'accéder à l'intérieur de ladite enceinte (19, 45).

7. Dispositif suivant l'une quelconque des revendications précédentes, caractérisé en ce que l'orifice (5, 44) dirigé vers le bas du récipient supérieur (1) ou du conduit supérieur (43) est fermé par une vanne (6).

8. Dispositif suivant la revendication 7, caractérisé en ce qu'il comporte des moyens d'actionnement (24,25,25a) de ladite vanne (6), lesquels sont disposés au moins partiellement à l'intérieur de l'enceinte (19, 45).

9. Conteneur (1) comportant un récipient (2) soutenu par un piètement (3), ledit récipient (2) comportant à sa partie inférieure une trémie (4), ladite trémie (4) se terminant vers le bas par une extrémité percée d'un orifice (5) et fermée par un couvercle (8) mobile, apte à être connectée à un dispositif suivant l'une quelconque des revendications 1 à 8 et comportant un moyen d'obturation (10) apte à coopérer avec des moyens correspondants (23) pour isoler le volume intérieur de l'enceinte (19) par rapport à l'atmosphère ambiante lorsque l'extrémité de la trémie est introduite dans la dite enceinte (19).

10. Conteneur (1) suivant la revendication 9, caractérisé en ce qu'il comporte à sa partie supérieure un orifice (11) dont l'embouchure est dirigée vers le haut, fermé par un couvercle (12) mobile, apte à être connecté à un dispositif suivant l'une quelconque des revendications 1 à 8 et comportant un moyen d'obturation (14) apte à coopérer avec un moyen correspondant (23) situé sur l'enceinte (43) pour isoler le volume intérieur de la dite enceinte (43) par rapport à l'atmosphère ambiante lorsque l'embouchure de son orifice (11) est introduite dans la dite enceinte (43).

11. Procédé pour transférer sans contamination des produits s'écoulant par gravité depuis un récipient supérieur (1) ou conduit supérieur (43) comportant un orifice (5, 44) dont l'embouchure est dirigée vers le bas, vers un récipient inférieur (1) ou conduit inférieur (16) situé à un niveau inférieur au premier et comportant un orifice (18, 11) dont l'embouchure est dirigée vers le haut, chacun de ces orifices (5, 44, 18, 11) étant obturable par un couvercle (8, 46, 27, 12) mobile, caractérisé en ce qu'il comporte les opérations suivantes:
a) amener axialement en regard l'un de l'autre les orifices respectifs des récipients (1, 1) ou conduits (16, 43)
b) prévoir une enceinte (19, 45) couvrant l'orifice d'un premier conteneur (1) ou conduit (16, 43), le volume intérieur de la dite enceinte (19, 45) étant séparé de l'atmosphère ambiante par des premiers moyens d'obturation (21)
c) ouvrir les premiers moyens d'obturation (21) de l'enceinte (19)
d) introduire l'embouchure de l'orifice du deuxième conteneur (1) ou conduit (16, 43) dans l'enceinte (19, 45)
e) séparer le volume intérieur de l'enceinte (19, 45) de l'atmosphère ambiante par des deuxièmes moyens d'obturation solidaires respectivement de l'enceinte (19, 45) et de l'embouchure du deuxième conteneur (1) ou conduit (16, 43)
f) ouvrir les couvercles respectifs (8, 46, 27, 12) des deux récipients (1, 1) ou conduits (16, 43)
g) déplacer axialement l'embouchure de l'orifice du premier conteneur (1) ou conduit (16, 43) de manière telle qu'elle se raccorde hermétiquement à l'embouchure du deuxième conteneur ou conduit
h) laisser s'écouler les produits à transférer
i) répéter les opérations ci-dessus en sens inverse après transfert d'une quantité adéquate de produits

12. Procédé suivant la revendication 11, caractérisé en ce que l'on fait passer un flux de gaz dans l'enceinte (19, 45) après l'opération d.

13. Procédé suivant la revendication 12, caractérisé en ce que le passage du flux de gaz dans l'enceinte (19, 45) est prolongé pendant les opérations e, f, et g.

14. Procédé suivant l'une quelconque des revendications 11 à 13, caractérisé en ce que l'on fait passer un flux de gaz dans l'enceinte (19, 45) après l'opération g.

15. Procédé suivant l'une quelconque des revendications 11 à 14, caractérisé en ce que le déplacement axial de l'orifice (18) du premier récipient (1) ou conduit (16) (opération e) s'effectue grâce à une chambre gonflable (32) solidaire d'un rebord (26) de l'embouchure dudit premier récipient (1) ou conduit (16).

16. Procédé suivant l'une quelconque des revendications 11 à 15, caractérisé en ce que l'écoulement du produit (opération h) s'effectue suite à l'actionnement d'une vanne (6) disposée à la partie inférieure du récipient (1) ou conduit (43) supérieur.

## Claims

1. Device for transferring, without contamination, products flowing out under gravity from an upper receptacle (1) or upper pipe (43) including an orifice (5, 44), the mouth of which points downwards, towards a lower receptacle (1) or lower pipe (16) situated at a lower level than the previous one and including an orifice (18, 11), the mouth of which points upwards, each orifice (5, 44, 18, 11) of these receptacles (1, 1) or pipe (16, 43) being able to be closed off by a movable cover (8, 46, 27, 12), characterized in that the said device includes
- a hermetic enclosure (19, 45) covering the orifice (18, 44) of one of the receptacles (1, 1) or pipes (16, 43), shaped such that the mouth of the orifice (5, 11) of the other receptacle (1, 1) or pipe (16, 43) can be inserted therein, the said enclosure (19, 45) including, on the same side as this other receptacle (1) or pipe (16, 43), an access (20) which can be closed off;
- first closing-off means (21) for isolating the inside volume of the enclosure (19, 45) with respect to the ambient atmosphere when another receptacle (1) or pipe (16, 43) is not connected up thereto, and actuating means (22a) for these first closing-off means (21);
- second closing-off means (10, 14) for isolating the inside volume of the enclosure (19, 45) with respect to the ambient atmosphere when the mouth of another receptacle (1) or pipe (16, 43) is inserted therein;
- means capable of opening the respective covers (8, 27, 12, 46) of the two receptacles (1) or pipes (16, 43) when their orifices (5, 18, 11, 44) are facing each other and when the enclosure (19, 45) is isolated from the ambient atmosphere by the second closing-off means (10, 14).

2. Device according to Claim 1, characterized in that it includes means (34) for injecting a gaseous fluid into the inner volume of the enclosure (19, 45).

3. Device according to either of Claims 1 and 2, characterized in that it includes means for sucking up a gaseous fluid, which are connected to the inside volume of the enclosure (19, 45).

4. Device according to any one of the preceding claims, characterized in that the respective covers (8, 27, 12, 46) of the two receptacles (1) or pipes (16, 43) include mutual securing means, such that the two covers (8, 27, 12, 46) may be actuated simultaneously by one and the same opening means (101).

5. Transfer device according to any one of the preceding claims, characterized in that the second closing-off means include a flange (10, 14) of suitable shape to be connected up hermetically to the access (20) of the said enclosure (19, 45).

6. Device according to Claim 5, characterized in that the enclosure (19, 45) includes, opposite its access (20), a hatch (40) allowing access to be gained to the inside of the said enclosure (19, 45).

7. Device according to any one of the preceding claims, characterized in that the downwards-pointing orifice (5, 44) of the upper receptacle (1) or of the upper pipe (43) is closed by a valve (6).

8. Device according to Claim 7, characterized in that it includes means (24, 25, 25a) for actuating the said valve (6), which means are located at least partially inside the enclosure (19, 45).

9. Container (1) including a receptacle (2) supported by an underframe (3), the said receptacle (2) including, at its lower part, a hopper (4), the said hopper (4) ending at the bottom in an end pierced with an orifice (5) and closed by a movable cover (8), capable of being connected to a device according to any one of Claims 1 to 8, and including a closing-off means (10) capable of interacting with corresponding means (23) for isolating the inside volume of the enclosure (19) with respect to the ambient atmosphere when the end of the hopper is inserted into the said enclosure (19).

10. Container (1) according to Claim 9, characterized in that it includes, at its upper part, an orifice (11), the mouth of which points upwards, closed by a movable cover (12), capable of being connected to a device according to any one of Claims 1 to 8 and including a closing-off means (14) capable of interacting with a corresponding means (23) situated on the enclosure (43) in order to isolate the inside volume of the said enclosure (43) with respect to the ambient atmosphere when the mouth of its orifice (11) is inserted into the said enclosure (43).

11. Method for transferring, without contamination, products flowing out under gravity from an upper receptacle (1) or upper pipe (43) including an orifice (5, 44), the mouth of which points downwards, towards a lower receptacle (1) or lower pipe (16) situated at a lower level than the first and including an orifice (18, 11), the mouth of which points upwards, each of these orifices (5, 44, 18, 11) being able to be closed off by a movable cover (8, 46, 27, 12), characterized in that it includes the following operations:
a) bringing the respective orifices of the receptacles (1, 1) or pipes (16, 43) to face each other axially
b) providing an enclosure (19, 45) covering the orifice of a first container (1) or pipe (16, 43), the inside volume of the said enclosure (19, 45) being separated from the ambient atmosphere by first closing-off means (21)
c) opening the first closing-off means (21) of the enclosure (19)
d) inserting the mouth of the orifice of the second container (1) or pipe (16, 43) into the enclosure (19, 45)
e) separating the inside volume of the enclosure (19, 45) from the ambient atmosphere by second closing-off means respectively secured to the enclosure (19, 45) and to the mouth of the second container (1) or a pipe (16, 43)
f) opening the respective covers (8, 46, 27, 12) of the two receptacles (1, 1) or pipes (16, 43)
g) axially displacing the mouth of the orifice of the first container (1) or pipe (16, 43) so that it connects up hermetically to the mouth of the second container or pipe
h) allowing the products to be transferred to flow out
i) repeating the above operations in the reverse order after an adequate amount of products has been transferred.

12. Method according to Claim 11, characterized in that a flow of gas is passed into the enclosure (19, 45) after the operation d.

13. Method according to Claim 12, characterized in that the passage of the flow of gas into the enclosure (19, 45) is prolonged during the operations e, f and g.

14. Method according to any one of Claims 11 to 13, characterized in that a flow of gas is passed into the enclosure (19, 45) after the operation g.

15. Method according to any one of Claims 11 to 14, characterized in that the axial displacement of the orifice (18) of the first receptacle (1) or pipe (16) (operation e) is carried out by virtue of an inflatable chamber (32) secured to a rim (26) of the mouth of the said first receptacle (1) or pipe (16).

16. Method according to any one of Claims 11 to 15, characterized in that the outflow of the product (operation h) is carried out following the actuation of a valve (6) located at the lower part of the upper receptacle (1) or pipe (43).

## Patentansprüche

1. Einrichtung zur verschmutzungsfreien Übergabe von durch Schwerkraft fließenden Produkten aus einem oberen Behälter (1) oder einer oberen Leitung (43), wobei Behälter und Leitung eine Öffnung (5, 44) aufweisen, deren Mündung nach unten auf einen unteren Behälter (1) oder eine untere Leitung (16) gerichtet ist, die gegenüber den vorhergehenden auf einer tieferen Ebene angeordnet sind und eine Öffnung (18, 11) aufweisen, deren Mündung nach oben gerichtet ist, wobei jede dieser Öffnungen (5, 44, 18, 11) dieser Behälter (1, 1) oder Leitungen (16, 43) mit einem beweglichen Deckel (8, 46, 27, 12) verschließbar ist, dadurch gekennzeichnet, daß diese Einrichtung folgende Merkmale aufweist:
- eine die Öffnung (18, 44) eines der Behälter (1, 1) oder einer der Leitungen (16, 43) abdeckende hermetische Umschließung (19, 45), derart ausgebildet, daß die Mündung der Öffnung (5, 11) des anderen Behälters (1, 1) oder der Leitung (16, 43) dort eingeführt werden kann, wobei die besagte Umschließung (19, 45) auf der Seite dieses anderen Behältes (1) oder der Leitung (16, 43) einen verschließbaren Zugang (20) aufweist,
- erste Verschlußmittel (21) zum Isolieren des Innenvolumens der Umschließung (19, 45) gegenüber der umgebenden Atmosphäre, wenn ein anderer Behälter (1) oder eine Leitung (16, 43) dort nicht angeschlossen ist, und Betätigungsmittel (22a) für diese ersten Verschlußmittel (21),
- zweite Verschlußmittel (10, 14) zum Isolieren des Innenvolumens der Umschließung (19, 45) gegenüber der umgebenden Atmosphäre, wenn die Mündung eines anderen Behälters (1) oder einer Leitung (16, 43) dort eingeführt wird,
- Mittel zum Öffnen der jeweiligen Deckel (8, 27, 12, 46) der beiden Behälter (1) oder Leitungen (16, 43), wenn sich deren Öffnungen (5, 18, 11, 44) in bezug aufeinander befinden und daß die Umschließung (19, 45) durch die zweiten Verschlußmittel (10, 14) gegenüber der umgebenden Atmosphäre isoliert wird.

2. Einrichtung nach Anspruch 1, dadurch gekennzeichnet, daß sie Mittel (34) zum Einspritzen eines gasförmigen Strömungsmittels in das Innenvolumen der Umschließung (19, 45) aufweist.

3. Einrichtung nach irgendeinem der Ansprüche 1 und 2, dadurch gekennzeichnet, daß sie mit dem Innenvolumen der Umschließung (19, 45) verbundene Mittel zum Ansaugen eines gasförmigen Strömungsmittels aufweist.

4. Einrichtung nach irgendeinem der vorhergehenden Ansprüche, dadurch gekennzeichnet, daß die jeweiligen Deckel (8, 27, 12, 46) der beiden Behälter (1) oder Leitungen (16, 43) Mittel zur gegenseitigen kraftschlüssigen Verbindung derart aufweisen, daß die beiden Deckel (8, 27, 12, 46) gleichzeitig durch das gleiche Öffnungsmittel (101) betätigt werden können.

5. Übergabeanlage nach irgendeinem der vorhergehenden Ansprüche, dadurch gekennzeichnet, daß die zweiten Verschlußmittel einen Kragen (10, 14) von geeigneter Form zum hermetischen Verbinden mit dem Zugang (20) der besagten Umschließung (19, 45) aufweisen.

6. Einrichtung nach Anspruch 5, dadurch gekennzeichnet, daß die Umschließung (19, 45) gegenüber ihrem Zugang (20) eine einen Zugang zum Inneren der besagten Umschließung (19, 45) zulassende Klappe (40) aufweist.

7. Einrichtung nach irgendeinem der vorhergehenden Ansprüche, dadurch gekennzeichnet, daß die auf die Unterseite des oberen Behälters (1) oder der oberen Leitung (43) ausgerichtete Öffnung (5, 44) mit einem Schieber (6) verschlossen ist.

8. Einrichtung nach Anspruch 7, dadurch gekennzeichnet, daß sie Betätigungsmittel (24, 25, 25a) für den Schieber (6) aufweist, die mindestens teilweise im Inneren der Umschließung (19, 45) angeordnet sind.

9. Behälter (1), enthaltend einen von einem Gestell (3) abgestützten Behälter (2), der in seinem unteren Bereich einen Trichter (4) aufweist, der in Richtung nach unten in einem von einer Öffnung (5) durchbrochenen und mit einem beweglichen Deckel (8) verschlossenen Ende ausläuft, das mit einer Einrichtung gemäß einem der vorhergehenden Ansprüche 1 bis 8 verbindbar ist und ein Verschlußmittel (10) zum Zusammenwirken mit den entsprechenden Mitteln (23) zum Isolieren des Innenvolumens der Umschließung (19) gegenüber der umgebenden Atmosphäre aufweist, sobald das Ende des Trichters in die besagte Umschließung (19) eingeführt ist.

10. Behälter (1) nach Anspruch 9, dadurch gekennzeichnet, daß er in seinem oberen Bereich eine Öffnung (11) aufweist, deren Mündung nach oben gerichtet und mit einem beweglichen Deckel (12) und mit einer Einrichtung gemäß irgendeinem der Patentansprüche 1 bis 8 verbindbar ist und ein Verschlußmittel (14) aufweist, das mit einem entsprechenden, auf der Umschließung (43) angeordneten Mittel (23) zusammenwirken kann zum Isolieren des Innenvolumens der besagten Umschließung (43) gegenüber der umgebenden Atmosphäre, sobald die Mündung ihrer Öffnung (11) in die besagte Umschließung (43) eingeführt ist.

11. Verfahren zur verschmutzungsfreien Übergabe von durch Schwerkraft fließenden Produkten aus einem oberen Behälter (1) oder einer oberen Leitung (43) mit einer Öffnung (5, 44), deren Mündung nach unten auf einen unteren Behälter (1) oder eine untere Leitung (16) gerichtet ist, die gegenüber dem vorhergehenden auf einer tieferen Ebene angeordnet ist und eine Öffnung (18, 11) aufweist, deren Mündung nach oben gerichtet ist, wobei jede dieser Öffnungen (5, 44, 18, 11) mit einem beweglichen Deckel (8, 46, 27, 12) verschließbar ist, dadurch gekennzeichnet, daß es die folgenden Vorgänge umfaßt:
a) axiales Stellen der jeweiligen Öffnungen der Behälter (1, 1) oder Leitungen (16, 43) in bezug aufeinander,
b) Vorsehen einer die Öffnung eines ersten Behälters (1) oder die Leitung (16, 43) bedeckenden Umschließung, wobei das Innenvolumen der Umschließung (19, 45) von der umgebenden Atmosphäre durch erste Verschlußmittel (21) getrennt ist.
c) Öffnen der ersten Verschlußmittel (21) der Umschließung (19),
d) Einführen der Mündung der Öffnung des zweiten Behälters (1) oder der Leitung (16, 43) in die Umschließung (19, 45),
e) Trennen des Innenvolumens der Umschließung (19, 45) der umgebenden Atmosphäre durch mit der Umschließung (19, 45) bzw. der Mündung des zweiten Behälters (1) oder der Leitung (16, 43) kraftschlüssig verbundene zweite Verschlußmittel,
f) Öffnen der jeweiligen Deckel (8, 46, 27, 12) der zweiten Behälter (1, 1) oder Leitungen (16, 43),
g) axiales Verschieben der Mündung der Öffnung des ersten Behälters (1) oder der Leitung (16, 43) derart, daß sie mit der Mündung des zweiten Behälters oder der Leitung hermetisch zusammenpaßt,
h) Fließenlassen der zu übergebenden Produkte,
i) Wiederholen der obigen Vorgänge im umgekehrten Sinne nach Übergabe einer adäquaten Menge der Produkte.

12. Verfahren nach Anspruch 11, dadurch gekennzeichnet, daß man nach dem Vorgang d eine Gasströmung durch die Umschließung (19, 45) durchtreten läßt.

13. Verfahren nach Anspruch 12, dadurch gekennzeichnet, daß der Durchtritt der Gasströmung durch die Umschließung (19, 45) während der Vorgänge e, f und g verlängert wird.

14. Verfahren nach irgendeinem der Ansprüche 11 bis 13, dadurch gekennzeichnet, daß man eine Gasströmung in der Umschließung (19, 45) nach dem Vorgang g durchtreten läßt.

15. Verfahren nach irgendeinem der Ansprüche 11 bis 14, dadurch gekennzeichnet, daß die Axialverschiebung der Öffnung (18) des ersten Behälters (1) oder der Leitung (16) (Vorgang e) aufgrund einer aufblasbaren Kammer (32), die mit einer Randleiste (26) der Mündung des besagten ersten Behälters (1) oder der Leitung (16) kraftschlüssig verbunden ist, erfolgt.

16. Verfahren nach irgendeinem der Ansprüche 11 bis 15, dadurch gekennzeichnet, daß das Durchfließen des Produktes (Vorgang h) im Anschluß an die Betätigung eines im unteren Bereich des Behälters (1) oder der oberen Leitung (43) angeordneten Schiebers (6) erfolgt.
